# EUROPÄISCHE PATENTSCHRIFT

(11) **EP 1 627 892 B1**
(45) Veröffentlichungstag und Bekanntmachung des Hinweises auf die Patenterteilung: **16.04.2008**
(21) Anmeldenummer: 05017082.8
(22) Anmeldetag: 05.08.2005
(51) Int. Cl.: C08G 77/08, C08G 77/38, C08G 77/46, B01J 31/14

(54) **Verfahren zur Herstellung von organisch modifizierten Polyorganosiloxanen durch katalytische dehydrogenative Kondensation von Polyorganosiloxanen mit Alkoholen**
Process for the preparation of organically modified polyorganosiloxanes by catalytic dehydrogenative condensation of polyorganosiloxanes with alcohols
Procédé de préparation de polyorganosiloxanes modifiés organiquement par condensation catalytique déshydrogénative de polyorganosiloxanes avec d'alcools

(30) Priorität: 18.08.2004 DE 102004039911
(43) Veröffentlichungstag der Anmeldung: 22.02.2006
(73) Patentinhaber: Evonik Goldschmidt GmbH, 45127 Essen (DE)
(72) Erfinder: Herrwerth, Sascha, Dr., 45128 Essen (DE); Neumann, Thomas, Dr., 44869 Bochum (DE); Ulrich-Brehm, Isabella, Dr., 40882 Ratingen (DE)

(56) Entgegenhaltungen:
- EP-A- 1 460 099
- WO-A-96/28497
- US-A- 3 202 617
- US-A1- 2002 156 223
- US-A1- 2003 065 117
- US-A1- 2003 139 287
- BLACKWELL JAMES M: "B(C6F5)3-catalyzed silylation of alcohols: a mild , general method for synthesis of silyl ethers" CAPLUS, 6. September 1999 (1999-09-06), XP002163708

## Beschreibung

Die Erfindung betrifft ein katalytisches System für die dehydrogenative Kondensation von Polyorganosiloxanen mit Alkoholen, bestehend aus Tris(pentafluorphenyl)boran und mindestens einer synergistisch wirksamen Verbindung, sowie ein Verfahren zur Umsetzung von Polyorganosiloxanen, bei dem unter Einsatz des erfindungsgemäßen katalytischen Systems ein an das Silicium gebundenes Wasserstoffatom durch einen Alkoholatrest ersetzt wird.

Um die einzigartigen Eigenschaften von Siloxanen in technischen Anwendungen nutzen zu können, ist zumeist eine Modifizierung des Siloxans mit organischen Gruppen erforderlich, da das reine Silicon im Allgemeinen unverträglich mit wässrigen oder organischen Formulierungen ist.

Um organische Gruppen an ein Siloxan zu binden, stehen grundsätzlich zwei verschiedene Bindungstypen zur Verfügung. Im ersten Fall ist ein Kohlenstoffatom direkt an ein Siliciumatom gebunden (SiC-Verknüpfung), im zweiten Fall ist ein Kohlenstoffatom über ein Sauerstoffatom an das Siliciumatom gebunden (SiOC-Verknüpfung). Die SiC-Verknüpfung resultiert zumeist aus einer Hydrosilylierungsreaktion, während für die Bildung einer SiOC-Verknüpfung mehrere Methoden zur Verfügung stehen. Klassischerweise werden SiOC-Verknüpfungen durch die Reaktion eines Siloxans mit einer am Siliciumatom gebundenen Abgangsgruppe (z.B. Halogen) und einem Alkohol gebildet. Besonders Chlorsiloxane sind für diesen Reaktionstyp weit verbreitet (US-4 301 268, US-4 306 050). Chlorsiloxane sind jedoch schwierig zu handhaben, da sie äußerst reaktionsfreudig sind. Der Einsatz von Chlorsiloxanen ist weiterhin mit dem Nachteil verbunden, dass der im Verlauf der Reaktion gebildete Chlorwasserstoff eine Handhabung auf korrosionsbeständige Anlagen beschränkt und zu ökologischen Problemen führt. Darüber hinaus können in Gegenwart von Chlorsiloxanen und Alkoholen organische Chlorverbindungen gebildet werden, die aus toxikologischen Gründen nicht wünschenswert sind. Weiterhin ist es nicht einfach, bei der Reaktion eines Chlorsiloxans mit einem Alkohol einen quantitativen Umsatz zu erreichen. Häufig müssen Basen, die als HCl-Fänger dienen, eingesetzt werden, um gute Umsätze zu erzielen. Durch Einsatz dieser Basen kommt es zur Bildung großer Mengen an Salzfracht, die ihrerseits im industriellen Maßstab Probleme bei der Entfernung bereiten.

Als Alternative zu diesem Verfahren bietet sich an, Alkohole mit Siloxanen umzusetzen, in denen Wasserstoff direkt an das Siliciumatom gebunden ist (SiH-Siloxane). Unter geeigneten Bedingungen kommt es hier bei Ausbildung der SiOC-Bindung lediglich zur Abspaltung von Wasserstoff und es fällt keine Salzfracht an. Diese dehydrogenative Kondensation läuft nur in Anwesenheit eines Katalysators ab.

Die US-5 147 965 verweist auf ein Verfahren, das in der japanischen Patentveröffentlichung JP-A-4819941 beschrieben wird und bei dem ein SiH-Siloxan mit einem Alkohol unter Zugabe von Alkalimetallhydroxiden oder Alkalimetallalkoxiden umgesetzt wird. Als nachteilig an diesem Verfahren wird erwähnt, dass diese Bedingungen zwar geeignet sind, eine dehydrogenative Kondensation zu katalysieren, es jedoch zugleich zu einer Equilibrierung und damit einem Umbau des Siloxangrundgerüstes kommt. Soll das Siloxangrundgerüst im Verlauf der Reaktion nicht verändert werden, ist diese Methode ungeeignet.

Im Gegensatz dazu beschreibt die EP-B-0 475 440 ein Verfahren, bei dem SiH-Siloxane mit einem Alkohol unter Zugabe einer organischen Säure in Gegenwart eines Pt-Salzes umgesetzt werden. Unter diesen Bedingungen kommt es zu keinem Umbau des Siloxangrundgerüstes. Für die Reaktion ist es aber unabdingbar, dass sowohl große Mengen an organischer Säure (0,1 bis 1 Mol bezogen auf Alkohol), Toluol als Lösungsmittel und ein Platinsalz eingesetzt werden. Da sowohl das Toluol als auch die organische Säure im Endprodukt unerwünscht sind, müssen diese nach beendeter Reaktion abgetrennt werden. Platinsalze sind nicht nur teuer, sondern sie sind aus physiologischer Sicht auch nicht ganz unbedenklich. Gerade im Bereich der kosmetischen Industrie gibt es den Wunsch nach Produkten frei von Platin.

Zum anderen kann die dehydrogenative Kondensation durch den Grubbs-Katalysator Cl₂(PCy₃)₂Ru=CHPh katalysiert werden, wobei 0,5 Mol-% der Verbindung als Katalysator eingesetzt werden. Bei diesem Verfahren kann ohne Lösungsmittel gearbeitet werden. Nachteilig an diesem Katalysator sind der hohe Preis und der Umstand, dass er sehr empfindlich gegen Oxidation ist, so dass unter sorgfältigem Luftausschluss gearbeitet werden muss. Darüber hinaus ist der Katalysator nicht nur in der gewünschten dehydrogenativen Kondensation, sondern auch in der homogen katalysierten Hydrierung aktiv, so dass der während der Kondensation gebildete Wasserstoff im Substrat enthaltene Doppelbindungen hydrieren kann (S. V. Maifeld, R. L. Miller, D. Lee Tetrahedron Lett. 2002, 43, 6363-6366).

Ferner wird in der nicht veröffentlichten Patentanmeldung DE-103 12 634 ein Verfahren zur Herstellung organisch modifizierter Polyorganosiloxane unter Verwendung einer katalytischen Mischung bestehend aus mindestens einer Säure und mindestens einem Salz einer Säure durch Verknüpfung von Wasserstoff-Siloxanen mit Alkoholen beschrieben.

Für die Herstellung von Alkoxysilanen durch Alkoholyse von monomeren Hydrosilanen beschreibt die Literatur die heterogene Katalyse von Salzen, wie z. B. Kaliumtartrat, -phthalat oder -formiat. Die Umsetzungen erfordern den äquimolaren Einsatz der Salze (bezogen auf SiH-Einheiten) und gelingen nur bei hohen Temperaturen von ca. 180 °C (J. Boyer, R.J.P. Corriu, R. Perz, C. Reye J. Organomet. Chem. 1978, 157, 153-162). Sowohl die drastischen Bedingungen als auch die großen Mengen an notwendigem Salz machen die Reaktion für den technischen Maßstab unattraktiv.

In den letzten Jahren wurde in der Literatur über eine weitere Methode zur dehydrogenativen Kondensation von monomeren Hydrosilanen mit Alkoholen berichtet. Hierbei wird Tris(pentafluorphenyl)boran als Katalysator für die Reaktion verwendet, wobei 1 bis 8 Mol-% der Verbindung als Katalysator eingesetzt werden und man in einem Lösungsmittel arbeitet (J.M. Blackwell, K.L. Foster, V.H. Beck, W.E. Piers J. Org. Chem. 1999, 64, 4887-4892).

In den nicht veröffentlichten Patentanmeldungen DE-A-103 12 636 und DE-A-103 59 764 werden technisch einfache Verfahren offenbart, die es erlauben, end- und/oder seitenständige Wasserstoff-Siloxane ohne Abbau des Siloxangerüsts chlorfrei unter Verwendung von borhaltigen Katalysatoren mit Alkoholen selektiv zu verknüpfen.

Diese Verfahren bieten technisch viele Vorteile und liefern hervorragende Produkte.

Die beschriebene Vorgehensweise birgt allerdings den Nachteil in sich, dass in vielen Fällen große Mengen von borhaltigen Katalysatoren zur Umsetzung benötigt werden. Hieraus ergibt sich aufgrund der hohen Preise der verwendeten Katalysatoren der Umstand, dass die erzielten Produkte zum Teil nicht wirtschaftlich hergestellt werden können. Neben den hohen Katalysatorkosten kann sich eine große Katalysatormenge auch durch Auftreten von Trübungen im Produkt negativ auswirken. Sehr hohe Mengen an boranhaltigen Verbindungen im Produkt sind auch aufgrund ihrer Toxizität und der sich daraus ableitenden Kennzeichnungspflicht nicht erstrebenswert.

Die oben beschriebenen Verfahren haben des Weiteren den Nachteil, dass bei den Umsetzungen von insbesondere mittelständigen SiH-Siloxanen mit bestimmten hydroxy-funktionellen Verbindungen (siehe Vergleichsbeispiele 6, 7) auch bei Einsatz hoher Katalysatorkonzentrationen keine Umsetzungen erreicht werden können.

Es bestand daher der Bedarf, ein technisch einfaches und wirtschaftliches Verfahren zu finden, das es ermöglicht, Siloxane ohne Abbau des Siloxangrundgerüsts chlorfrei und lösemittelfrei mit Alkoholen selektiv zu verknüpfen, wobei mit deutlich reduzierten Mengen an borhaltigen Katalysatoren gearbeitet werden kann. Zusätzlich sollten die Limitierungen bei der Umsetzung von mittelständigen SiH-Siloxanen mit bestimmten Alkoholen überwunden werden.

Es wurde nun überraschenderweise gefunden, dass eine erhebliche Reduktion der Borkatalysatormenge durch die Verwendung des erfindungsgemäß eingesetzten katalytischen Systems erzielt werden kann.

Ferner konnten unter Verwendung des erfindungsgemäßen katalytischen Systems Umsetzungen realisiert werden, die unter alleiniger Verwendung des borhaltigen Katalysators nicht möglich waren.

Als weiterer Vorteil treten bei der Verwendung von ungesättigten oder (meth)acrylsäureesterhaltigen Alkoholen unter Einsatz des erfindungsgemäß Verwendeten katalytischen Systems keine Hydrosilylierungsreaktionen an SiH-Gruppen unter SiC-Verknüpfung auf. Zusätzlich kommt es bei Verwendung von (meth)acrylsäureesterhaltigen Alkoholen nicht zu einer Si-OC-Verknüpfung über die Carbonylfunktion, wie dies für Rhodium-, Ruthenium- und Platin-Katalysatoren beschrieben wird.

Erfindungsgemäß eingesetzt wird demzufolge ein Katalysator für die dehydrogenative Kondensation von -Si(H)-Einheiten enthaltenden Polyorganosiloxanen der allgemeinen Formel (I) 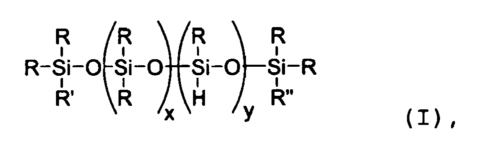 in denen
- R: einen oder mehrere gleiche oder verschiedene Reste, ausgewählt aus linearen oder verzweigten, gesättigten, ein- oder mehrfach ungesättigten Alkyl-, Aryl-, Alkylaryl- oder Arylalkylresten mit 1 bis 20, insbesondere 1 bis 10 Kohlenstoffatomen, Halogenalkylgruppen mit 1 bis 20 Kohlenstoffatomen, Siloxygruppen und Triorganosiloxygruppen,
- R': und R" unabhängig voneinander H oder R,
- x: eine ganze Zahl von 0 bis 300, vorzugsweise 0 bis 200,
- y: eine ganze Zahl von 0 bis 100, vorzugsweise 0 bis 50, insbesondere < 40 darstellt,
mit der Maßgabe, dass mindestens ein an ein Si-Atom gebundenes Wasserstoffatom im Molekül vorhanden ist,
mit wenigstens einem Alkohol, der ausgewählt ist aus der Gruppe der linearen oder verzweigten, gesättigten, ein- oder mehrfach ungesättigten, aromatischen, fluorierten oder perfluorierten, einfach oder mehrfach (meth)-acrylierten, aliphatisch-aromatischen, gegebenenfalls andere Funktionen tragenden Mono- oder Polyalkoholen, Polyethermono- oder Polyetherpolyalkoholen, Aminoalkoholen, insbesondere N-Alkyl-, Arylamino-EO-, -PO-Alkoholen, N-Alkyl- oder Arylaminoalkoholen sowie deren Gemische,
welcher dadurch gekennzeichnet ist, dass als Katalysator ein katalytisches System, bestehend aus Tris(pentafluorphenyl)boran und mindestens einer synergistisch wirksamen Verbindung, wie Salze oder Komplexe, mit Kationen ausgewählt aus Titan, Zirkon, Chrom, Mangan, Eisen, Nickel, Palladium und Zinn verwendet wird.

Als Anionen der synergistisch aktiven Verbindungen des katalytischen Systems können bevorzugt Alkoxylate, Säureanionen, insbesondere Carboxylate, Sulfate, Nitrate oder Phosphate, Halogenide, insbesondere Chloride, Oxide oder Komplexliganden, insbesondere Acetylacetonat oder Carbonyle, verwendet werden.

Gegenstand der Erfindung ist ein Verfahren zur teilweisen oder vollständigen Umsetzung von einer oder mehreren -Si(H)-Einheiten enthaltenden Polyorganosiloxanen der allgemeinen Formel (I) 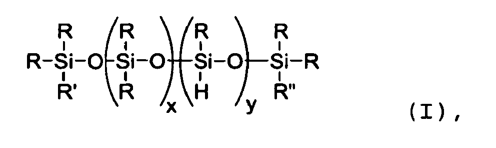 in denen
- R: einen oder mehrere gleiche oder verschiedene Reste, ausgewählt aus linearen oder verzweigten, gesättigten, ein- oder mehrfach ungesättigten Alkyl-, Aryl-, Alkylaryl- oder Arylalkylresten mit 1 bis 20, insbesondere 1 bis 10 Kohlenstoffatomen, Halogenalkylgruppen mit 1 bis 20 Kohlenstoffatomen, Siloxygruppen und Triorganosiloxygruppen,
- R': und R" unabhängig voneinander H oder R,
- x: eine ganze Zahl von 0 bis 300, vorzugsweise 0 bis 200, und
- y: eine ganze Zahl von 0 bis 100, vorzugsweise 0 bis 50, insbesondere < 40, darstellt,
mit der Maßgabe, dass mindestens ein an ein Si-Atom gebundenes Wasserstoffatom im Molekül vorhanden ist, mit wenigstens einem Alkohol, der ausgewählt ist aus der Gruppe der linearen oder verzweigten, gesättigten, ein- oder mehrfach ungesättigten, aromatischen, fluorierten oder perfluorierten, einfach oder mehrfach (meth)-acrylierten, aliphatisch-aromatischen Mono- oder Polyalkoholen, Polyethermono- oder Polyetherpolyalkoholen, Aminoalkoholen, insbesondere N-Alkyl-, Arylamino-EO-, -PO-Alkoholen, N-Alkyl- oder Arylaminoalkoholen sowie deren Gemische,
welches dadurch gekennzeichnet ist, dass man den in den Si(H)(R)-O-Einheiten des Polyorganosiloxans vorhandenen Wasserstoff gegebenenfalls unter Inertgas, gegebenenfalls unter Mitverwendung von Lösungsmitteln in einem Verfahrensschritt unter Einsatz des erfindungsgemäß verwendeten katalytischen Systems bei Temperaturen von 70 °C bis 150 °C teilweise oder vollständig durch Alkoholatreste der eingesetzten Alkohole ersetzt.

Die Umsetzung der endständigen und/oder seitenständigen Si-H-funktionellen Siloxane mit den zuvor definierten Alkoholen unter Einsatz des erfindungsgemäß verwendeten Katalytischen Systems werden nach der folgenden allgemeinen Synthesevorschrift durchgeführt:
Der Alkohol wird mit oder ohne Lösungsmittel und dem erfindungsgemäßen katalytischen System evtl. unter Schutzgas vorgelegt und auf ca. 70 °C bis ca. 150 °C erhitzt. Anschließend wird das Si-H-funktionelle Siloxan zugetropft und die Reaktionsmischung bis zur vollständigen Umsetzung gerührt. Die Reaktionsführung kann dahin modifiziert werden, dass der Alkohol, das erfindungsgemäße katalytische System und das Si-H-funktionelle Siloxan mit oder ohne Lösungsmittel vorgelegt und auf Reaktionstemperatur erwärmt werden (Eintopfreaktion).

Des Weiteren können diese Umsetzungen unter Verwendung von Schutzgas, Magerluft oder Inhibitoren durchgeführt werden.

Bei dieser Vorgehensweise ist die Reihenfolge der Zugabe des Tris(pentafluorphenyl)borons und der synergistisch wirkenden Verbindungen beliebig wählbar. Des Weiteren kann das erfindungsgemäß verwendete katalytische System separat in einem geeigneten Medium (Lösungsmittel, Reaktanden) präpariert und in der Reaktion eingesetzt werden.

Überraschenderweise ist bei Verwendung des erfindungsgemäßen katalytischen Systems eine im Vergleich zur alleinigen verwendung der borhaltigen Verbindung stark reduzierte Menge an borhaltiger Verbindung ausreichend, um eine Umsetzung zu erzielen.

Des Weiteren können überraschenderweise unter Verwendung des erfindungsgemäßen katalytischen Systems Umsetzungen von SiH-Siloxanen mit bestimmten hydroxyfunktionellen Verbindungen durchgeführt werden, die unter alleiniger Verwendung der borhaltigen Verbindung nicht erzielt werden können (siehe erfindungsgemäße Beispiele 19, 20).

Dies ist umso überraschender, da die erfindungsgemäßen mit der Borverbindung synergistisch wirkenden Verbindungen für sich genommen keine katalytische Wirksamkeit bei der dehydrogenativen Kondensation aufweisen.

Im erfindungsgemäßen Verfahren kann grundsätzlich jede alkoholische Hydroxylgruppen aufweisende organische Verbindung eingesetzt werden, einschließlich der einfachen Alkohole sowie deren Alkoxylierungsprodukte, der Diole, Triole, Polyole, Aminoalkohole und beispielsweise Hydroxycarbonsäuren und deren jeweiligen Derivate. Besonders bevorzugt sind Ethanol sowie Propylenoxid- bzw. Ethylenoxid-funktionalisierte Polyetheralkohole, die beispielsweise mit Butylalkohol, Allylalkohol oder Nonylphenol gestartet wurden, fluorierte und perfluorierte Alkohole und einfach oder mehrfach (meth)acrylierte Mono- oder Polyalkohole.

Der Alkohol wird vorzugsweise äquimolar oder im Überschuss eingesetzt; besonders bevorzugt stellt man beim erfindungsgemäßen Verfahren das Stoffmengen-Verhältnis von SiH-Gruppen zu Alkoholgruppen im Bereich von 1 : 1 bis 1 : 3 Moläquivalenten ein.

Ohne Weiteres lassen sich nach dem erfindungsgemäßen Verfahren auch teilsubstituierte Polyorganosiloxane herstellen, die neben den substituierten Si-OC-Einheiten noch nicht umgesetzte Si(H)-Einheiten aufweisen. Dazu wird das Stoffmengen-Verhältnis von SiH-Gruppen zu Alkoholgruppen vorzugsweise im Bereich von 1 : 0,1 bis 1 : 0,99 Moläquivalenten eingestellt.
Die erfindungsgemäßen via dehydrogenativer Kondensation modifizierten Polysiloxane können in einer einzigen Synthesestufe in unterschiedlichen Kettenlängen und/oder Modifizierungsarten hergestellt werden, da die Herstellung ohne den Abbau des Siloxangrundgerüsts erfolgt.

Für maßgeschneiderte Produkte ist es ferner möglich, dass vor der Umsetzung der Alkohole mit den Si-H-Siloxanen unter Verwendung des erfindungsgemäßen katalytischen Systems eine beliebige andere Reaktion mit einem Teil der Wasserstoffatome des Si-H-Siloxans durchgeführt wird, hierbei im speziellen eine Hydrosilylierung.

Um die Nebenreaktion von Si-H zu Si-OH zu unterbinden, ist es vorteilhaft, die eingesetzten Alkohole, insbesondere beim Einsatz von Polyetheralkoholen, vor dem Einsatz zu trocknen. Dies kann nach bekannten Verfahren wie beispielsweise durch Trocknungsmittel oder Vakuumdestillation erfolgen.

Im erfindungsgemäßen Verfahren eingesetzte Polyorganosiloxane können rein endständig, d. h. Si-H-Gruppen befinden sich lediglich an den Kopfgruppen der Polysiloxankette, rein seitenständig, d. h. Si-H-Gruppen befinden sich lediglich im Innern, nicht jedoch an den Kopfgruppen der Polysiloxankette, oder gemischtständig sein.

In gleicher Weise und ganz besonders bevorzugt können im erfindungsgemäßen Verfahren seitenständige, α,ω-disubstituierte und gemischte Polydimethyl-Wasserstoffsiloxane der allgemeinen Formel (I) eingesetzt werden.

Ganz besonders bevorzugt ist beispielsweise der Einsatz von Polyorganosiloxanen der nachstehenden Formel (II)

M-O-Dₓ-D'_{y}-M (II)

wobei
- M: für Trialkylsilyl, insbesondere Trimethylsilyl,
- D: für Dialkylsilyloxy, insbesondere Dimethylsilyloxy und
- D': für 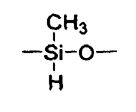
steht.

Ebenso ganz besonders bevorzugt ist beispielsweise der Einsatz von Polyorganosiloxanen der nachstehenden Formel (III)

M'-O-Dₓ-M' (III)

wobei
- M': für Dialkyl(hydrogen)silyl, insbesondere Dimethylhydrogensilyl und
- D: für Dialkylsilyloxy, insbesondere Dimethylsilyloxy
steht.

Ebenso ganz besonders bevorzugt ist beispielsweise der Einsatz von Polyorganosiloxanen der nachstehenden Formel (IV)

M'-O-Dₓ-D'_{y}-M' (IV)

wobei
- M': für Dialkyl(hydrogen)silyl, insbesondere Dimethylhydrogensilyl,
- D: für Dialkylsilyloxy, insbesondere Dimethylsilyloxy und
- D': für 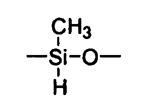
steht.

Das erfindungsgemäße Verfahren kann lösungsmittelfrei durchgeführt werden, was insbesondere für die großtechnische Realisierung unter wirtschaftlichen und ökologischen Aspekten vorteilhaft ist.

Folglich konnte in dem Bestreben, die Nachteile des Standes der Technik zu überwinden, ein neues katalytisches System für ein Verfahren bereitgestellt werden, welches die Verknüpfung von Alkoholen mit SiH-Siloxanen unter Verwendung von deutlich reduzierten Mengen an borhaltiger Verbindung, ermöglicht. Ferner konnten Umsetzungen von Alkoholen mit SiH-Siloxanen unter Verwendung des erfindungsgemäßen katalytischen Systems erzielt werden, die unter alleiniger verwendung der borhaltigen Verbindung nicht möglich waren.

Die erfindungsgemäßen Polyorganosiloxane sind für die Ausrüstung von Textilien, abhäsive Trennbeschichtungen, UV-härtende Beschichtungen, als Additive für UV-härtende Beschichtungen, als Additive für Kunststoffe, Lacke, Druckfarben und für kosmetische Formulierungen oder im Bautenfarbenbereich und/oder als Polyurethan-Schaumstabilisatoren verwendbar.

### Beispiele:

Nachfolgende Beispiele sollen zur Verdeutlichung der Erfindung dienen, sie stellen jedoch keinerlei Einschränkung dar.

### Vergleichsbeispiele A:

Zur Veranschaulichung der Einsatzmenge von Tris(pentafluorphenyl)boran ohne synergistisch wirksame Verbindung wurden folgende Experimente durchgeführt, wobei bei (a) mit einer ausreichenden und bei (b) mit einer ungenügenden Menge an Tris(pentafluorphenyl)boran gearbeitet wurde:
1a. Umsetzung von einem endständig Si-H-funktionellen Siloxan (x = 7,2, y = 0, R' und R" = H) mit Isofol 12 (Sasol) unter Verwendung einer ausreichenden Menge an Tris(pentafluorphenyl)boran:
   37,4 g Isofol 12 (Sasol) werden in einem Vierhalskolben, ausgestattet mit Rührer, Intensivkühler, Thermometer und Tropftrichter, zusammen mit 0,01 g (100 ppm) Tris(pentafluorphenyl)boran als Katalysator auf 120 °C aufgeheizt. Bei Erreichen der Temperatur werden 62,6 g endständig Si-H-funktionalisiertes Polydimethylsiloxan (x = 7,2, y = 0, R' und R" = H) der allgemeinen Formel HMe₂SiO(SiMe₂O)_{7,2}SiMe₂H (SiH-Wert: 0,302 %) innerhalb von 20 Minuten zugetropft. Eine Stunde nach beendeter Zugabe und Abkühlen lag der Umsatz, entsprechend der SiH-Wert Methode bei 100 %.
   Nach der Abdestillation der flüchtigen Verbindungen erhält man eine farblose, klare Flüssigkeit.
1b. Umsetzung von einem endständig Si-H-funktionellen Siloxan (x = 7,2, y = 0, R' und R" = H) mit Isofol 12 (Sasol) unter Verwendung einer nicht ausreichenden Menge an Tris(pentafluorphenyl)boran (vgl. 10, 11):
   37,4 g Isofol 12 (Sasol) werden in einem Vierhalskolben, ausgestattet mit Rührer, Intensivkühler, Thermometer und Tropftrichter, zusammen mit 0,002 g (20 ppm) Tris(pentafluorphenyl)boran als Katalysator auf 120 °C aufgeheizt. Bei Erreichen der Temperatur werden 62,6 g endständig Si-H-funktionalisiertes Polydimethylsiloxan (x = 7,2, y = 0, R' und R" = H) der allgemeinen Formel HMe₂SiO(SiMe₂O)_{7,2}SiMe₂H (SiH-Wert: 0,302 %) innerhalb von 20 Minuten zugetropft. Eine Stunde nach beendeter Zugabe und Abkühlen lag der Umsatz, entsprechend der SiH-Wert Methode bei 0 %.
2a. Umsetzung eines endständig Si-H-funktionellen Siloxans (x = 13, y = 0, R' und R" = H) mit einem Polypropylenoxid-Polyether unter Verwendung einer ausreichenden Menge an Tris(pentafluorphenyl)boran:
   75,6 g eines mit Butanol gestarteten Polypropylenoxid-Polyethers (mittlere Molmasse 1.800 g/mol) werden in einem Vierhalskolben, ausgestattet mit Rührer, Rückflusskühler, Thermometer und Tropftrichter, zusammen mit 0,012 g (120 ppm) Tris-(pentafluorphenyl)boran als Katalysator auf 120 °C aufgeheizt. Nach Erreichen der Temperatur werden 24,3 g endständig Si-H-funktionalisiertes Polydimethylsiloxan (x = 13, y = 0, R' und R" = H) der allgemeinen Formel HMe₂SiO(SiMe₂O)₁₃SiMe₂H (SiH-Wert : 0,183 %) innerhalb von 20 Minuten zugetropft. Eine Stunde nach beendeter Zugabe und Abkühlen lag der Umsatz, entsprechend der SiH-Wert Methode bei 100 %.
2b. Umsetzung eines endständig Si-H-funktionellen Siloxans (x = 13, y = 0, R' und R" = H) mit einem Polypropylenoxid-Polyether unter Verwendung einer nicht ausreichenden Menge an Tris(pentafluorphenyl)boran (vgl. 12):
   75,6 g eines mit Butanol gestarteten Polypropylenoxid-Polyethers (mittlere Molmasse 1.800 g/mol) werden in einem Vierhalskolben, ausgestattet mit Rührer, Rückflusskühler, Thermometer und Tropftrichter, zusammen mit 0,001 g (10 ppm) Tris-(pentafluorphenyl)boran als Katalysator auf 120 °C aufgeheizt. Nach Erreichen der Temperatur werden 24,3 g endständig Si-H-funktionalisiertes Polydimethylsiloxan (x = 13, y = 0, R' und R" = H) der allgemeinen Formel HMe₂SiO(SiMe₂O)₁₃SiMe₂H (SiH-Wert: 0,183 %) innerhalb von 20 Minuten zugetropft. Vier Stunden nach beendeter Zugabe und Abkühlen lag der Umsatz, entsprechend der SiH-Wert Methode bei 0 %.
3a. Umsetzung von einem mittelständig Si-H-funktionellen Siloxan (x = 13, y = 5, R' und R" = Me) mit 2-Ethylhexanol (Fluka) unter Verwendung einer ausreichenden Menge an Tris(pentafluorphenyl)boran:
   32,5 g 2-Ethylhexanol (Fluka) werden in einem Vierhalskolben, ausgestattet mit Rührer, Intensivkühler, Thermometer und Tropftrichter, zusammen mit 0,03 g (300 ppm) Tris(pentafluorphenyl)boran als Katalysator auf 120 °C aufgeheizt. Bei Erreichen der Temperatur werden 67,5 g mittelständig Si-H-funktionalisiertes Polydimethylsiloxan (x = 13, y = 5, R' und R" = Me) der allgemeinen Formel Me₃SiO(SiHMeO)₅(SiMe₂O)₁₃SiMe₃ (SiH-Wert: 0,353 %) innerhalb von 20 Minuten zugetropft. Eine Stunde nach beendeter Zugabe und Abkühlen lag der Umsatz, entsprechend der SiH-Wert Methode bei 100 %.
   Nach der Abdestillation der flüchtigen Verbindungen erhält man eine farblose, klare Flüssigkeit.
3b. Umsetzung von einem mittelständig Si-H-funktionellen Siloxan (x = 13, y = 5, R' und R" = Me) mit 2-Ethylhexanol (Fluka) unter Verwendung einer nicht ausreichenden Menge an Tris(pentafluorphenyl)boran (vgl. 13, 14):
   32,5 g 2-Ethylhexanol (Fluka) werden in einem Vierhalskolben, ausgestattet mit Rührer, Intensivkühler, Thermometer und Tropftrichter, zusammen mit 0,006 g (60 ppm) Tris(pentafluorphenyl)boran als Katalysator auf 120 °C aufgeheizt. Bei Erreichen der Temperatur werden 67,5 g mittelständig Si-H-funktionalisiertes Polydimethylsiloxan (x = 13, y = 5, R' und R" = Me) der allgemeinen Formel Me₃SiO(SiHMeO)₅(SiMe₂O)₁₃SiMe₃ (SiH-Wert: 0,353 %) innerhalb von 20 Minuten zugetropft. Eine Stunde nach beendeter Zugabe und Abkühlen lag der Umsatz, entsprechend der SiH-Wert Methode bei 0 %.
4a. Umsetzung von einem mittelständig Si-H-funktionellen Siloxan (x = 13, y = 5, R' und R" = Me) mit 2-Hydroxyethylacrylat (CH₂=CH-C(O)-O-CH₂-CH₂-OH) unter Verwendung einer ausreichenden Menge an Tris(pentafluorphenyl)boran:
   121,9 g 2-Hydroxyethylacrylsäureester werden in einem Vierhalskolben, ausgestattet mit Rührer, Intensivkühler, Thermometer und Tropftrichter, zusammen mit 0,384 g (943 ppm) Tris(pentafluorphenyl)boran als Katalysator und 300 ppm Methylhydrochinon auf 110 °C aufgeheizt. Bei Erreichen der Temperatur werden 285,5 g mittelständig Si-H-funktionalisiertes Polydimethylsiloxan (x = 13, y = 5, R' und R" = Me) der allgemeinen Formel Me₃SiO(SiHMeO)₅(SiMe₂O)₁₃SiMe₃ (SiH-Wert: 0,353 %) innerhalb von 20 Minuten zugetropft. Eine Stunde nach beendeter Zugabe und Abkühlen lag der Umsatz, entsprechend der SiH-Wert Methode bei 100 %.
   Nach der Abdestillation der flüchtigen Verbindungen erhält man eine farblose, klare Flüssigkeit.
4b. Umsetzung von einem mittelständig Si-H-funktionellen Siloxan (x = 13, y = 5, R' und R" = Me) mit 2-Hydroxyethylacrylat (CH₂=CH-C(O)-O-CH₂-CH₂-OH) unter Verwendung einer nicht ausreichenden Menge an Tris-(pentafluorphenyl)boran (vgl. 15, 16, 17):
   121,9 g 2-Hydroxyethylacrylsäureester werden in einem Vierhalskolben, ausgestattet mit Rührer, Intensivkühler, Thermometer und Tropftrichter, zusammen mit 0,19 g (466 ppm) Tris(pentafluorphenyl)boran als Katalysator und 300 ppm Methylhydrochinon auf 110 °C aufgeheizt. Bei Erreichen der Temperatur werden 285,5 g mittelständig Si-H-funktionalisiertes Polydimethylsiloxan (x = 13, y = 5, R' und R" = Me) der allgemeinen Formel Me₃SiO(SiHMeO)₅(SiMe₂O)₁₃SiMe₃ (SiH-Wert: 0,353 %) innerhalb von 20 Minuten zugetropft. Eine Stunde nach beendeter Zugabe und Abkühlen lag der Umsatz, entsprechend der SiH-Wert Methode bei 0 %.
5a. Umsetzung eines mittelständig Si-H-funktionellen Siloxans (x = 63,5, y = 6,5, R' und R" = Me) mit einem Polypropylenoxid-Polyether unter Verwendung einer ausreichenden Menge an Tris(pentafluorphenyl)boran:
   40,0 g eines mit Butanol gestarteten Polypropylenoxid-Polyethers (mittlere Molmasse 1.800 g/mol) werden in einem Vierhalskolben, ausgestattet mit Rührer, Rückflusskühler, Thermometer und Tropftrichter, zusammen mit 0,016 g (300 ppm) Tris-(pentafluorphenyl)boran als Katalysator auf 120 °C aufgeheizt. Nach Erreichen der Temperatur werden 14,5 g mittelständig Si-H funktionalisiertes Polydimethylsiloxan (x = 63,5, y = 6,5, R' und R" = Me) der allgemeinen Formel Me₃SiO(SiHMeO)_{6,5}-(SiMe₂O)_{63,5}SiMe₃ (SiH-Wert: 0,13 %) innerhalb von 20 Minuten zugetropft. Eine Stunde nach beendeter Zugabe und Abkühlen lag der Umsatz, entsprechend der SiH-Wert Methode bei 100 %.
5b. Umsetzung eines mittelständig Si-H-funktionellen Siloxans (x = 63,5, y = 6,5, R' und R" = Me) mit einem Polypropylenoxid-Polyether unter Verwendung einer nicht ausreichenden Menge an Tris(pentafluorphenyl)boran (vgl. 18):
   40,0 g eines mit Butanol gestarteten Polypropylenoxid-Polyethers (mittlere Molmasse 1.800 g/mol) werden in einem Vierhalskolben, ausgestattet mit Rührer, Rückflusskühler, Thermometer und Tropftrichter, zusammen mit 0,006 g (120 ppm) Tris(pentafluorphenyl)boran als Katalysator auf 120 °C aufgeheizt. Nach Erreichen der Temperatur werden 14,5 g mittelständig Si-H-funktionalisiertes Polydimethylsiloxan (x = 63,5, y = 6,5, R' und R" = Me) der allgemeinen Formel Me₃SiO (SiHMeO)_{6,5}-(SiMe₂O)_{63,5}SiMe₃ (SiH-Wert: 0,13 %) innerhalb von 20 Minuten zugetropft. Vier Stunden nach beendeter Zugabe und Abkühlen lag der Umsatz, entsprechend der SiH-Wert Methode bei 0 %.

### Vergleichsbeispiele B:

Umsetzungen, die unter alleiniger Verwendung von Tris-(pentafluorphenyl)boran nicht realisiert werden konnten:
6. Umsetzung eines mittelständig Si-H-funktionellen Siloxans (x = 63,5, y = 6,5, R' und R" = Me) mit einem Polyether, der aus Propylenoxid und Ethylenoxid zusammengesetzt ist, unter Verwendung von Tris-(pentafluorphenyl)boran (vgl. 19):
   40,8 g eines mit Butanol gestarteten Polyethers (mittlere Molmasse 1.400 g/mol), der zu 58 % Propylenoxid (Rest Ethylenoxid) enthält, werden in einem Vierhalskolben, ausgestattet mit Rührer, Rückflusskühler, Thermometer und Tropftrichter, zusammen mit 0,039 g (950 ppm) Tris(pentafluorphenyl)boran als Katalysator auf 120 °C aufgeheizt. Nach Erreichen der Temperatur werden 20,0 g mittelständig Si-H-funktionalisiertes Polydimethylsiloxan (x = 63,5, y = 6,5, R' und R" = Me) der allgemeinen Formel Me₃SiO(SiHMeO)_{6,5}(SiMe₂O)_{63,5}SiMe₃ (SiH-Wert: 0,13 %) innerhalb von 20 Minuten zugetropft. Vier Stunden nach beendeter Zugabe ist entsprechend der SiH-Wert Methode noch immer kein Umsatz zu verzeichnen.
7. Umsetzung eines mittelständig Si-H-funktionellen Siloxans (x = 63,5, y = 6,5, R' und R" = Me) mit einem Polyether, der aus Propylenoxid und Ethylenoxid zusammengesetzt ist, unter Verwendung von Tris-(pentafluorphenyl)boran (vgl. 20):
   85,0 g eines mit Butanol gestarteten Polyethers (mittlere Molmasse 4.400 g/mol), der zu 58 % Propylenoxid (Rest Ethylenoxid) enthält, werden in einem Vierhalskolben, ausgestattet mit Rührer, Rückflusskühler, Thermometer und Tropftrichter, zusammen mit 0,2 g (2.000 ppm) Tris(pentafluorphenyl)boran als Katalysator auf 120 °C aufgeheizt. Nach Erreichen der Temperatur werden 15,0 g mittelständig Si-H-funktionalisiertes Polydimethylsiloxan (x = 63,5, y = 6,5, R' und R" = Me) der allgemeinen Formel Me₃SiO (SiHMeO)_{6,5}(SiMe₂O)_{63,5}SiMe₃ (SiH-Wert: 0,13 %) innerhalb von 20 Minuten zugetropft. Vier Stunden nach beendeter Zugabe ist entsprechend der SiH-Wert Methode noch immer kein Umsatz zu verzeichnen.

### Vergleichsbeispiele C:

Umsetzungsversuche unter alleiniger Verwendung der synergistisch wirkenden Verbindungen:
8. Umsetzungsversuch von einem mittelständig Si-H-funktionellen Siloxan (x = 13, y = 5, R' und R" = Me) mit 2-Hydroxyethylacrylat (CH₂=CH-C(O)-O-CH₂-CH₂-OH) unter Verwendung von Zirkon-IV-acetylacetonat (vgl. 17):
   121,9 g 2-Hydroxyethylacrylat werden in einem Vierhalskolben, ausgestattet mit Rührer, Intensivkühler, Thermometer und Tropftrichter, zusammen mit 0,081 g (200 ppm) Zirkon-IV-acetylacetonat und 300 ppm Methylhydrochinon auf 110 °C aufgeheizt. Bei Erreichen der Temperatur werden 285,5 g mittelständig Si-H-funktionalisiertes Polydimethylsiloxan (x = 13, y = 5, R' und R" = Me) der allgemeinen Formel Me₃SiO(SiHMeO)₅(SiMe₂O)₁₃SiMe₃ (SiH-Wert: 0,353 %) innerhalb von 20 Minuten zugetropft. Eine Stunde nach beendeter Zugabe und Abkühlen lag der Umsatz, entsprechend der SiH-Wert Methode bei 0 %.
9. Umsetzungsversuch eines mittelständig Si-H-funktionellen Siloxans (x = 63,5, y = 6,5, R' und R" = Me) mit einem Polypropylenoxid-Polyether unter Verwendung von Mangan-II-acetat (vgl. 18):
   40,0 g eines mit Butanol gestarteten Polypropylenoxid-Polyethers (mittlere Molmasse 1.800 g/mol) werden in einem Vierhalskolben, ausgestattet mit Rührer, Rückflusskühler, Thermometer und Tropftrichter, zusammen mit 0,01 g Mangan-II-acetat (200 ppm) auf 120 °C aufgeheizt. Nach Erreichen der Temperatur werden 14,5 g mittelständig Si-H-funktionalisiertes Polydimethylsiloxan (x = 63,5, y = 6,5, R' und R" = Me) der allgemeinen Formel Me₃SiO(SiHMeO)_{6,5}(SiMe₂0)_{63,5}SiMe₃ (SiH-Wert: 0,13 %) innerhalb von 20 Minuten zugetropft. Vier Stunden nach beendeter Zugabe und Abkühlen ist entsprechend der SiH-Wert Methode kein Umsatz festzustellen.

### Erfindungsgemäße Beispiele:

10. Umsetzung von einem endständig Si-H-funktionellen Siloxan (x = 7,2, y = 0, R' und R" = H) mit Isofol 12 (Sasol) unter Verwendung von Tris(pentafluorphenyl)boran und der synergistisch aktiven Verbindung Titan-IV-isopropylat (vgl. 1b):
   37,4 g Isofol 12 (Sasol) und 0,02 g Titan-IV-isopropylat (200 ppm) werden in einem Vierhalskolben, ausgestattet mit Rührer, Intensivkühler, Thermometer und Tropftrichter, zusammen mit 0,002 g (20 ppm) Tris(pentafluorphenyl)boran auf 120 °C aufgeheizt. Bei Erreichen der Temperatur werden 62,6 g endständig Si-H-funktionalisiertes Polydimethylsiloxan (x = 7,2, y = 0, R' und R" = H) der allgemeinen Formel HMe₂SiO(SiMe₂O)_{7,2}SiMe₂H (SiH-Wert: 0,302 %) innerhalb von 20 Minuten zugetropft. Eine Stunde nach beendeter Zugabe und Abkühlen lag der Umsatz, entsprechend der SiH-Wert Methode bei 100 %.
   Nach der Abdestillation der flüchtigen Verbindungen erhält man eine farblose, klare Flüssigkeit.
11. Umsetzung von einem endständig Si-H-funktionellen Siloxan (x = 7,2, y = 0, R' und R" = H) mit Isofol 12 (Sasol) unter Verwendung von Tris(pentafluorphenyl)boran und der synergistisch aktiven Verbindung Eisen-II-chlorid Hydrat (vgl. 1b):
   37,4 g Isofol 12 (Sasol) und 0,005 g (50 ppm) Eisen-II-chlorid Hydrat werden in einem Vierhalskolben, ausgestattet mit Rührer, Intensivkühler, Thermometer und Tropftrichter, zusammen mit 0,002 g (20 ppm) Tris(pentafluorphenyl)boran auf 120 °C aufgeheizt. Bei Erreichen der Temperatur werden 62,6 g endständig Si-H-funktionalisiertes Polydimethylsiloxan (x = 7,2, y = 0, R' und R" = H) der allgemeinen Formel HMe₂SiO(SiMe₂O)_{7,2}SiMe₂H (SiH-Wert: 0,302 %) innerhalb von 20 Minuten zugetropft. Eine Stunde nach beendeter Zugabe und Abkühlen lag der Umsatz, entsprechend der SiH-Wert Methode bei 100 %.
   Nach der Abdestillation der flüchtigen Verbindungen erhält man eine leicht gelbe, klare Flüssigkeit.
12. Umsetzung eines endständig Si-H-funktionellen Siloxans (x = 13, y = 0, R' und R" = H) mit einem Polypropylenoxid-Polyether unter Verwendung von Tris(pentafluorphenyl)boran und der synergistisch aktiven Verbindung Palladium-II-acetat (vgl. 2b):
   62,0 g eines mit Butanol gestarteten Polypropylenoxid-Polyethers (mittlere Molmasse 1.800 g/mol) und 0,016 g Palladium-II-acetat (200 ppm) werden in einem Vierhalskolben, ausgestattet mit Rührer, Intensivkühler, Thermometer und Tropftrichter vorgelegt, 0,0008 g (10 ppm) Tris(pentafluorphenyl)boran zugegeben und anschließend auf 120 °C aufgeheizt. Bei Erreichen der Temperatur werden 18,0 g endständig Si-H-funktionalisiertes Polydimethylsiloxan (x = 13, y = 0, R' und R" = H) der allgemeinen Formel HMe₂SiO(SiMe₂O)₁₃SiMe₂H (SiH-Wert: 0,18 %) innerhalb von 20 Minuten zugetropft. Eine Stunde nach beendeter Zugabe und Abkühlen lag der Umsatz, entsprechend der SiH-Wert Methode bei 100 %.
   Nach Abtrennen des heterogenen Palladium-II-acetats mittels Filtration erhält man eine klare Flüssigkeit.
13. Umsetzung von einem mittelständig Si-H-funktionellen Siloxan (x = 13, y = 5, R' und R" = Me) mit 2-Ethylhexanol (Fluka) unter Verwendung von Tris(pentafluorphenyl)boran und der synergistisch aktiven Verbindung Zinn-II-chlorid Hydrat (vgl. 3b):
   32,5 g 2-Ethylhexanol (Fluka) und 0,02 g (200 ppm) Zinn-II-chlorid Hydrat werden in einem Vierhalskolben, ausgestattet mit Rührer, Intensivkühler, Thermometer und Tropftrichter vorgelegt, 0,006 g (60 ppm) Tris(pentafluorphenyl)boran zugegeben und anschließend auf 120 °C aufgeheizt. Bei Erreichen der Temperatur werden 67,5 g mittelständig Si-H-funktionalisiertes Polydimethylsiloxan (x = 13, y = 5, R' und R" = Me) der allgemeinen Formel Me₃SiO(SiHMeO)₅(SiMe₂O)₁₃SiMe₃ (SiH-Wert: 0,353 %) innerhalb von 20 Minuten zugetropft. Eine Stunde nach beendeter Zugabe und Abkühlen lag der Umsatz, entsprechend der SiH-Wert Methode bei 100 %.
   Nach der Abdestillation der flüchtigen Verbindungen erhält man eine farblose, klare Flüssigkeit.
14. Umsetzung von einem mittelständig Si-H-funktionellen Siloxan (x = 13, y = 5, R' und R" = Me) mit 2-Ethylhexanol (Fluka) unter Verwendung von Tris(pentafluorphenyl)boran und der synergistisch aktiven Verbindung Zirkon-IV-chlorid (vgl. 3b):
   32,5 g 2-Ethylhexanol (Fluka) und 0,02 g (200 ppm) Zirkon-IV-chlorid werden in einem Vierhalskolben, ausgestattet mit Rührer, Intensivkühler, Thermometer und Tropftrichter vorgelegt, 0,006 g (60 ppm) Tris-(pentafluorphenyl)boran zugegeben und anschließend auf 120 °C aufgeheizt. Bei Erreichen der Temperatur werden 67,5 g mittelständig Si-H-funktionalisiertes Polydimethylsiloxan (x = 13, y = 5, R' und R" = Me) der allgemeinen Formel Me₃SiO(SiHMeO)₅(SiMe₂O)₁₃SiMe₃ (SiH-Wert: 0,353 %) innerhalb von 20 Minuten zugetropft. Eine Stunde nach beendeter Zugabe und Abkühlen lag der Umsatz, entsprechend der SiH-Wert Methode bei 100 %.
   Nach der Abdestillation der flüchtigen Verbindungen erhält man eine farblose, klare Flüssigkeit.
15. Umsetzung von einem mittelständig Si-H-funktionellen Siloxan (x = 13, y = 5, R' und R" = Me) mit 2-Hydroxyethylacrylat (CH₂=CH-C(O)-O-CH₂-CH₂-OH) unter Verwendung von Tris(pentafluorphenyl)boran und der synergistisch aktiven Verbindung Chrom-III-chlorid (vgl. 4b):
   121,9 g 2-Hydroxyethylacrylat werden in einem Vierhalskolben, ausgestattet mit Rührer, Intensivkühler, Thermometer und Tropftrichter, zusammen mit 0,115 g (282 ppm) Tris(pentafluorphenyl)boran, 0,081 g (200 ppm) Chrom-III-chlorid und 300 ppm Methylhydrochinon auf 110 °C aufgeheizt. Bei Erreichen der Temperatur werden 285,5 g mittelständig Si-H-funktionalisiertes Polydimethylsiloxan (x = 13, y = 5, R' und R" = Me) der allgemeinen Formel Me₃SiO(SiHMeO)₅(SiMe₂O)₁₃SiMe₃ (SiH-Wert: 0,353 %) innerhalb von 20 Minuten zugetropft. Eine Stunde nach beendeter Zugabe und Abkühlen lag der Umsatz, entsprechend der SiH-Wert Methode bei 100 %.
   Nach Abtrennung des heterogenen Chrom-III-chlorids mittels Filtration und anschließender Abdestillation der flüchtigen Verbindungen erhält man eine farblose, klare Flüssigkeit.
16. Umsetzung von einem mittelständig Si-H-funktionellen Siloxan (x = 13, y = 5, R' und R" = Me) mit 2-Hydroxyethylacrylat (CH₂=CH-C(O)-O-CH₂-CH₂-OH) unter Verwendung von Tris(pentafluorphenyl)boran und der synergistisch aktiven Verbindung Nickel-II-sulfat (vgl. 4b):
   121,9 g 2-Hydroxyethylacrylat werden in einem Vierhalskolben, ausgestattet mit Rührer, Intensivkühler, Thermometer und Tropftrichter, zusammen mit 0,19 g (466 ppm) Tris(pentafluorphenyl)boran, 0,081 g (200 ppm) Nickel-II-sulfat und 300 ppm Methylhydrochinon auf 110 °C aufgeheizt. Bei Erreichen der Temperatur werden 285,5 g mittelständig Si-H-funktionalisiertes Polydimethylsiloxan (x = 13, y = 5, R' und R" = Me) der allgemeinen Formel Me₃SiO(SiHMeO)₅(SiMe₂O)₁₃SiMe₃ (SiH-Wert: 0,353 %) innerhalb von 20 Minuten zugetropft. Eine Stunde nach beendeter Zugabe und Abkühlen lag der Umsatz, entsprechend der SiH-Wert Methode bei 100 %.
   Nach Abtrennung des heterogenen Nickel-II-sulfats mittels Filtration und anschließender Abdestillation der flüchtigen Verbindungen erhält man eine farblose, klare Flüssigkeit.
17. Umsetzung von einem mittelständig Si-H-funktionellen Siloxan (x = 13, y = 5, R' und R'' = Me) mit 2-Hydroxyethylacrylat (CH₂=CH-C(O)-O-CH₂-CH₂-OH) unter Verwendung von Tris(pentafluorphenyl)boran und der synergistisch aktiven Verbindung Zirkon-IV-acetylacetonat (vgl. 4b bzw. 8):
   121,9 g 2-Hydroxyethylacrylat werden in einem Vierhalskolben, ausgestattet mit Rührer, Intensivkühler, Thermometer und Tropftrichter, zusammen mit 0,148 g (385 ppm) Tris (pentafluorphenyl) boran, 0,081 g (200 ppm) Zirkon-IV-acetylacetonat und 300 ppm Methylhydrochinon auf 110 °C aufgeheizt. Bei Erreichen der Temperatur werden 285,5 g mittelständig Si-H-funktionalisiertes Polydimethylsiloxan (x = 13, y = 5, R' und R" = Me) der allgemeinen Formel Me₃SiO(SiHMeO)₅(SiMe₂O)₁₃SiMe₃ (SiH-Wert: 0,353 %) innerhalb von 20 Minuten zugetropft. Eine Stunde nach beendeter Zugabe und Abkühlen lag der Umsatz, entsprechend der SiH-Wert Methode bei 100 %.
   Nach der Abdestillation der flüchtigen Verbindungen erhält man eine farblose, klare Flüssigkeit.
18. Umsetzung eines mittelständig Si-H-funktionellen Siloxans (x = 63,5, y = 6,5, R' und R" = Me) mit einem Polypropylenoxid-Polyether unter Verwendung von Tris(pentafluorphenyl)boran und der synergistisch aktiven Verbindung Mangan-II-acetat (vgl. 5b bzw. 9):
   40,0 g eines mit Butanol gestarteten Polypropylenoxid-Polyethers (mittlere Molmasse 1.800 g/mol) und 0,011 g Mangan-II-acetat (200 ppm) werden in einem Vierhalskolben, ausgestattet mit Rührer, Rückflusskühler, Thermometer und Tropftrichter, zusammen mit 0,007 g (120 ppm) Tris(pentafluorphenyl)boran als Katalysator auf 120 °C aufgeheizt. Nach Erreichen der Temperatur werden 14,5 g mittelständig Si-H funktionalisiertes Polydimethylsiloxan (x = 63,5, y = 6,5, R' und R" = Me) der allgemeinen Formel Me₃SiO(SiHMeO)_{6,5}-(SiMe₂O)_{63,5}SiMe₃ (SiH-Wert: 0,13 %) innerhalb von 20 Minuten zugetropft. Eine Stunde nach beendeter Zugabe und Abkühlen lag der Umsatz, entsprechend der SiH-Wert Methode bei 100 %.
19. Umsetzung eines mittelständig Si-H-funktionellen Siloxans (x = 63,5, y = 6,5, R' und R" = Me) mit einem Polyether, der aus Propylenoxid und Ethylenoxid zusammengesetzt ist, unter Verwendung von Tris(pentafluorphenyl)boran und der synergistisch aktiven Verbindung Eisen-III-chlorid (vgl. 6):
   40,8 g eines mit Butanol gestarteten Polyethers (mittlere Molmasse 1.400 g/mol), der zu 58 % Propylenoxid (Rest Ethylenoxid) enthält und 0,006 g Eisen-III-chlorid (100 ppm) werden in einem Vierhalskolben, ausgestattet mit Rührer, Rückflusskühler, Thermometer und Tropftrichter, zusammen mit 0,012 g (300 ppm) Tris(pentafluorphenyl)boran als Katalysator auf 120 °C aufgeheizt. Nach Erreichen der Temperatur werden 20,0 g mittelständig Si-H-funktionalisiertes Polydimethylsiloxan (x = 63,5, y = 6,5, R' und R" = Me) der allgemeinen Formel Me₃SiO(SiHMeO)_{6,5}(SiMe₂O)_{63,5}SiMe₃ (SiH-Wert: 0,13 %) innerhalb von 20 Minuten zugetropft. Drei Stunden nach beendeter Zugabe und Abkühlen lag der Umsatz, entsprechend der SiH-Wert Methode bei 100 %.
20. Umsetzung eines mittelständig Si-H-funktionellen Siloxans (x = 63,5, y = 6,5, R' und R" = Me) mit einem Polyether, der aus Propylenoxid und Ethylenoxid zusammengesetzt ist, unter Verwendung von Tris(pentafluorphenyl)boran und der synergistisch aktiven Verbindung Eisen-III-chlorid-Hexahydrat (vgl. 7):
   85,0 g eines mit Butanol gestarteten Polyethers (mittlere Molmasse 4.400 g/mol), der zu 58 % Propylenoxid (Rest Ethylenoxid) enthält, und 0,015 g Eisen-III-chlorid-Hexahydrat (150 ppm) werden in einem Vierhalskolben, ausgestattet mit Rührer, Rückflusskühler, Thermometer und Tropftrichter, zusammen mit 0,03 g (300 ppm) Tris(pentafluorphenyl)boran als Katalysator auf 120 °C aufgeheizt. Nach Erreichen der Temperatur werden 15,0 g mittelständig Si-H-funktionalisiertes Polydimethylsiloxan (x = 63,5, y = 6,5, R' und R" = Me) der allgemeinen Formel Me₃SiO(SiHMeO)_{6,5}(SiMe₂O)_{63,5}SiMe₃ (SiH-Wert: 0,13 %) innerhalb von 20 Minuten zugetropft. Eine Stunde nach beendeter Zugabe und Abkühlen lag der Umsatz, entsprechend der SiH-Wert Methode bei 100 %.

## Patentansprüche

1. Verfahren zur teilweisen oder vollständigen Umsetzung von eine oder mehrere -Si(H)-Einheiten enthaltenden Polyorganosiloxanen der allgemeinen Formel (I) 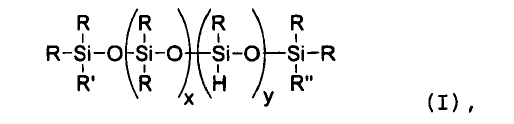 in denen
R einen oder mehrere gleiche oder verschiedene Reste, ausgewählt aus linearen oder verzweigten, gesättigten, ein- oder mehrfach ungesättigten Alkyl-, Aryl-, Alkylaryl- oder Arylalkylresten mit 1 bis 20 Kohlenstoffatomen, Halogenalkylgruppen mit 1 bis 20 Kohlenstoffatomen, Siloxygruppen und Triorganosiloxygruppen,
R' und R" unabhängig voneinander H oder R,
x eine ganze Zahl von 0 bis 300,
y eine ganze Zahl von 0 bis 100 darstellt,
mit der Maßgabe, dass mindestens ein an ein Si-Atom gebundenes Wasserstoffatom im Molekül vorhanden ist, mit wenigstens einem Alkohol, der ausgewählt ist aus der Gruppe der linearen oder verzweigten, gesättigten, ein- oder mehrfach ungesättigten, aromatischen, fluorierten oder perfluorierten, einfach oder mehrfach (meth)acrylierten, aliphatisch-aromatischen Mono- oder Polyalkoholen, Polyethermono- oder Polyetherpolyalkoholen, Aminoalkoholen, insbesondere N-Alkyl-, Arylamino-EO-, -PO-Alkoholen, N-Alkyl- oder Arylaminoalkoholen sowie deren Gemische,
**dadurch gekennzeichnet,**
**dass** in den Si(H)(R)-O-Einheiten des Polyorganosiloxans vorhandener Wasserstoff gegebenenfalls unter Inertgas, gegebenenfalls unter Mitverwendung von Lösungsmitteln in einem Verfahrensschritt unter Einsatz eines katalytischen Systems bei Temperaturen von 70 °C bis 150 °C teilweise oder vollständig durch Alkoholatreste der eingesetzten Alkohole ersetzt werden,
wobei ein katalytisches System bestehend aus, Tris(pentafluorphenyl)boran
und mindestens einer synergistisch wirksamen Verbindung, wie Salze oder Komplexe, mit Kationen, ausgewählt aus Titan, Zirkon, Chrom, Mangan, Eisen, Nickel, Palladium und Zinn,
eingesetzt wird.

2. Verfahren nach Anspruch 1, **dadurch gekennzeichnet, dass** als Anionen der synergistisch wirkenden Verbindungen bevorzugt Alkoxylate, Säureanionen, insbesondere Carboxylate, Sulfate, Nitrate oder Phosphate, Halogenide, insbesondere Chloride, Oxide oder Komplexliganden, insbesondere Acetylacetonat oder Carbonyle, verwendet werden.

3. Verfahren nach einem der Ansprüche 1 bis 2, **dadurch gekennzeichnet, dass** als Alkohol mindestens eine Verbindung aus der Gruppe: Methanol, Ethanol, Butylpolyetheralkohöle, Allylpolyetheralkohole oder Nonylphenolpolyetheralkohole, styroloxidhaltige Polyetheralkohole, butylenoxidhaltige Polyetheralkohole, einfach oder mehrfach (meth)acrylierte Mono- oder Polyalkohole, fluorierte oder perfluorierte Mono- oder Polyalkohole eingesetzt wird.

4. Verfahren gemäß mindestens einem der Ansprüche 1 bis 3, **dadurch gekennzeichnet, dass** ein Stoffmengenverhältnis von SiH-Gruppen zu Alkoholgruppen im Bereich von 1 : 1 bis 1 : 3 Moläquivalenten eingestellt wird.

5. Verfahren gemäß mindestens einem der Ansprüche 1 bis 4, **dadurch gekennzeichnet, dass** das Stoffmengenverhältnis von SiH-Gruppen zu Alkoholgruppen im Bereich von 1 : 0,1 bis 1 : 0,99 Moläquivalenten liegt.

6. Verfahren gemäß mindestens einem der Ansprüche 1 bis 5, **dadurch gekennzeichnet, dass** als Polyorganosiloxane endständige SiH-Polyorganosiloxane eingesetzt werden.

7. Verfahren gemäß mindestens einem der Ansprüche 1 bis 6, **dadurch gekennzeichnet, dass** als Polyorganosiloxane seitenständige oder gleichzeitig seitenständige und endständige (gemischtständige) SiH-Polyorganosiloxane eingesetzt werden.

8. Verfahren gemäß mindestens einem der Ansprüche 1 bis 7, **dadurch gekennzeichnet, dass** als Polysiloxane Verbindungen, ausgewählt aus der Gruppe der kammartigen, α,ω-disubstituierten und gemischten Polydimethyl-Wasserstoffsiloxane der allgemeinen Formel (I) eingesetzt werden.

9. Verfahren gemäß Patentanspruch 8, **dadurch gekennzeichnet, dass** Polyorganosiloxane eingesetzt werden, die ausgewählt sind aus der Gruppe der allgemeinen Formel (III)
M'-O-Dₓ-M' (III)
worin
M' für Dialkyl(hydrogen)silyl, insbesondere Dimethylhydrogensilyl und
D für Dialkylsilyloxy, insbesondere Dimethylsilyloxy
steht.

10. Verfahren gemäß Patentanspruch 8, **dadurch gekennzeichnet, dass** Polyorganosiloxane eingesetzt werden, die ausgewählt sind aus der Gruppe der allgemeinen Formel (II)
M-O-Dₓ-D'_{y}-M (II)
wobei
M für Trialkylsilyl, insbesondere Trimethylsilyl,
D für Dialkylsilyloxy, insbesondere Dimethylsilyloxy und
D' für 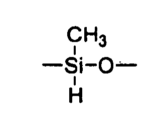
steht.

11. Verfahren gemäß Patentanspruch 8, **dadurch gekennzeichnet, dass** Polyorganosiloxane eingesetzt werden, die ausgewählt sind aus der Gruppe der allgemeinen Formel (IV)
M'-O-Dₓ-D'_{y}-M' (IV)
wobei
M' für Dialkyl(hydrogen)silyl, insbesondere Dimethylhydrogensilyl,
D für Dialkylsilyloxy, insbesondere Dimethylsilyloxy steht und
D' für 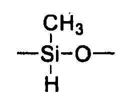
steht.

12. Verfahren gemäß mindestens einem der Ansprüche 1 bis 11, **dadurch gekennzeichnet, dass** die Umsetzung lösungsmittelfrei durchgeführt wird.

13. Verfahren gemäß mindestens einem der Ansprüche 1 bis 12, **dadurch gekennzeichnet, dass** mit einem Teil der Wasserstoffatome des SiH-Siloxans bereits eine Hydrosilylierung durchgeführt wurde.

## Claims

1. Process for the partial or full reaction of polyorganosiloxanes of the general formula (I) containing one or more -Si(H) units 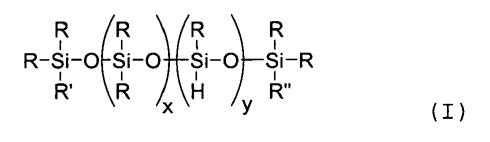 in which
R represents one or more identical or different radicals selected from linear or branched, saturated, mono- or polyunsaturated alkyl, aryl, alkylaryl or arylalkyl radicals having from 1 to 20 carbon atoms, haloalkyl groups having from 1 to 20 carbon atoms, siloxy groups and triorganosiloxy groups,
R' and R" each independently represent H or R,
x represents an integer from 0 to 300,
y represents an integer from 0 to 100,
with the proviso that at least one hydrogen atom bonded to an Si atom is present in the molecule, with at least one alcohol which is selected from the group of the linear or branched, saturated, mono- or polyunsaturated, aromatic, fluorinated or perfluorinated, mono- or poly(meth)acrylated, aliphatic-aromatic mono- or polyalcohols, polyether mono- or polyether polyalcohols, amino alcohols, in particular N-alkyl, arylamino-EO or -PO alcohols, N-alkyl or arylamino alcohols, and mixtures thereof,
**characterized in that** hydrogen present in the Si(H)(R)-O units of the polyorganosiloxane is replaced, optionally under inert gas, optionally with use of solvents, partly or fully by alkoxide radicals of the alcohols used, in one process step using a catalytic system at temperatures of from 70°C to 150°C,
in which a catalytic system comprising tris(pentafluorophenyl)borane and at least one of a synergistically effective compound; such as salts or complexes, with cations, selected from titanium, zirconium, chromium, manganese, iron, nickel, palladium and tin, is used.

2. Process according to Claim 1, **characterized in that** the anions of the synergistically active compounds are preferably alkoxylates, acid anions, especially carboxylates, sulfates, nitrates or phosphates, halides, especially chlorides, oxides or complex ligands, especially acetylacetonate or carbonyls.

3. Process according to one of Claims 1 to 2, **characterized in that** the alcohol used is at least one compound from the group of: methanol, ethanol, butyl polyether alcohols, allyl polyether alcohols or nonylphenol polyether alcohols, styrene oxide-containing polyether alcohols, butylene oxide-containing polyether alcohols, mono- or poly(meth)acrylated mono- or polyalcohols, fluorinated or perfluorinated mono- or polyalcohols.

4. Process according to at least one of Claims 1 to 3, **characterized in that** a ratio of SiH groups to alcohol groups in the range from 1:1 to 1:3 molar equivalents is established.

5. Process according to at least one of Claims 1 to 4, **characterized in that** the ratio of SiH groups to alcohol groups is in the range from 1:0.1 to 1:0.99 molar equivalents.

6. Process according to at least one of Claims 1 to 5, **characterized in that** the polyorganosiloxanes used are terminal SiH polyorganosiloxanes.

7. Process according to at least one of Claims 1 to 6, **characterized in that** the polyorganosiloxanes used are pendant or simultaneously terminal and pendant (mixed) SiH polyorganosiloxanes.

8. Process according to at least one of Claims 1 to 7, **characterized in that** the polysiloxanes used are compounds selected from the group of the comblike, α,ω-disubstituted and mixed polydimethylhydrosiloxanes of the general formula (I).

9. Process according to Claim 8, **characterized in that** polyorganosiloxanes are used which are selected from the group of general formula (III)
M'-O-Dₓ-M' (III)
in which
M' is dialkyl(hydro)silyl, in particular dimethylhydrosilyl, and
D is dialkylsilyloxy, in particular dimethylsilyloxy.

10. Process according to Claim 8, **characterized in that** polyorganosiloxanes are used which are selected from the group of the general formula (II)
M-O-Dₓ-D'_{y}-M (II)
where
M is trialkylsilyl, in particular trimethylsilyl,
D is dialkylsilyloxy, in particular dimethylsilyloxy, and
D' is

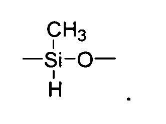

11. Process according to Claim 8, **characterized in that** polyorganosiloxanes are used which are selected from the group of the general formula (IV)
M'-O-Dₓ-D'_{y}-M' (IV)
where
M' is dialkyl(hydro)silyl, in particular dimethylhydrosilyl,
D is dialkylsilyloxy, in particular dimethylsilyloxy, and
D' is

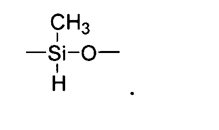

12. Process according to at least one of Claims 1 to 11, **characterized in that** the reaction is carried out without solvent.

13. Process according to at least one of Claims 1 to 12, **characterized in that** a hydrosilylation has already been carried out with a proportion of the hydrogen atoms of the SiH siloxane.

## Revendications

1. Procédé pour la réaction partielle ou complète de polyorganosiloxanes, contenant une ou plusieurs unités -Si(H)-, de formule générale (I) : 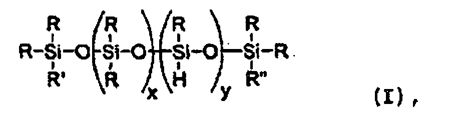 dans laquelle :
R représente un ou plusieurs radicaux identiques ou différents, choisis parmi des radicaux alkyle, aryle, alkylaryle ou arylalkyle linéaires ou ramifiés, saturés, insaturés une ou plusieurs fois, ayant 1 à 20 atomes de carbone, des groupes halogénoalkyle ayant 1 à 20 atomes de carbone, des groupes siloxy et des groupes triorganosiloxy,
R' et R" représentent indépendamment l'un de l'autre H ou R,
x est un nombre entier de 0 à 300,
y est un nombre entier de 0 à 100
à condition qu'au moins un atome d'hydrogène lié à un atome de Si soit présent dans la molécule, avec au moins un alcool qui est choisi dans le groupe constitué des alcools linéaires ou ramifiés, saturés, insaturés une ou plusieurs fois, aromatiques, fluorés ou perfluorés, (méth)acrylés une ou plusieurs fois, aliphatiques-aromatiques, de types mono- ou polyalcools, mono- ou polyalcools de polyéthers, aminoalcools, en particulier les N-alkyl-, arylamino-OE- et arylamino-OP-alcools, les N-alkyl- ou arylaminoalcools ainsi que leurs mélanges,
**caractérisé en ce que** :
l'hydrogène présent dans les unités Si(H)(R)-O du polyorganosiloxane est substitué éventuellement sous gaz inerte, le cas échéant en utilisant conjointement des solvants dans une étape de procédé en mettant en oeuvre un système catalytique à des températures de 70 °C à 150 °C, partiellement ou complètement par des radicaux alcoolate des alcools utilisés,
dans lequel on utilise un système catalytique constitué de tris(pentafluorophényl)borane
et d'au moins un composé efficace au plan synergique, par exemple des sels ou des complexes, avec des cations choisis parmi le titane, le zirconium, le chrome, le manganèse, le fer, le nickel, le palladium et l'étain.

2. Procédé selon la revendication 1, **caractérisé en ce que** l'on utilise comme anions des composés efficaces au plan synergique, de préférence des alcoxylates, des anions d'acides, en particulier des carboxylates, des sulfates, des nitrates ou des phosphates, des halogénures, en particulier des chlorures, des oxydes ou des ligands complexes, en particulier l'acétylacétonate ou le carbonyle.

3. Procédé selon l'une quelconque des revendications 1 à 2, **caractérisé en ce que** l'on utilise comme alcool au moins un composé choisi dans le groupe des composés suivants : méthanol, éthanol, alcools de polyéthers de butyle, alcools de polyéthers d'allyle ou alcools de polyéther de nonylphénol, alcools de polyéthers contenant de l'oxyde de styrène, alcools de polyéthers contenant de l'oxyde de butylène, mono- ou polyalcools (méth)acrylés une ou plusieurs fois, mono- ou polyalcools fluorés ou perfluorés.

4. Procédé selon au moins l'une quelconque des revendications 1 à 3, **caractérisé en ce que** l'on ajuste un rapport quantitatif matériel des groupes SiH aux groupes alcool dans la plage de 1:1 à 1:3 équivalents molaires.

5. Procédé selon au moins l'une quelconque des revendications 1 à 4, **caractérisé en ce que** l'on situe le rapport quantitatif matériel des groupes SiH aux groupes alcool dans la plage de 1:0,1 à 1:0,99 équivalent molaire

6. Procédé selon au moins l'une quelconque des revendications 1 à 5, **caractérisé en ce que** l'on utilise comme polyorganosiloxanes des polyorganosiloxanes de SiH en position terminale.

7. Procédé selon au moins l'une quelconque des revendications 1 à 6, **caractérisé en ce que** l'on utilise comme polyorganosiloxanes des polyorganosiloxanes de SiH en position latérale ou en position simultanément latérale et terminale (position mixte).

8. Procédé selon au moins l'une quelconque des revendications 1 à 7, **caractérisé en ce que** l'on utilise comme polysiloxanes des composés choisis dans le groupe des polydiméthyl-hydrogénosiloxanes en peigne, α,ω-disubstitués et mixtes de formule générale (I).

9. Procédé selon la revendication 8, **caractérisé en ce que** l'on utilise des polyorganosiloxanes qui sont choisis dans le groupe de formule générale (III) :
**M'-O-Dₓ-M'** (III)
dans laquelle :
M' représente un groupe dialkyl(hydrogéno)silyle, en particulier un groupe diméthylhydrogénosilyle et
D représente un groupe dialkylsilyloxy, en particulier diméthylsilyloxy.

10. Procédé selon la revendication 8, **caractérisé en ce que** l'on utilise des polyorganosiloxanes qui sont choisis dans le groupe de formule générale (II) :
**M-O-Dₓ-D'_{y}-M** (II)
dans laquelle :
M représente un groupe trialkylsilyle, en particulier triméthylsilyle,
D représente un groupe dialkylsilyloxy, en particulier diméthylsilyloxy et
D' représente :

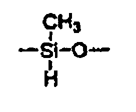

11. Procédé selon la revendication 8, **caractérisé en ce que** l'on utilise des polyorganosiloxanes qui sont choisis dans le groupe de formule générale (IV) :
**M' -O-Dₓ-D' _{y}-M'** (IV)
dans laquelle :
M' représente un groupe dialkyl(hydrogéno)silyle, en particulier diméthylhydrogénosilyle,
D représente un groupe dialkylsilyloxy, en particulier diméthylsilyloxy.
D' représente :

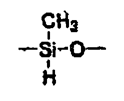

12. Procédé selon au moins l'une quelconque des revendications 1 à 11, **caractérisé en ce que** la réaction se fait sans solvant.

13. Procédé selon au moins l'une quelconque des revendications 1 à 12, **caractérisé en ce que** l'on a déjà effectué une hydrosilylation avec une partie des atomes d'hydrogène du siloxane de SiH.
